# EUROPEAN PATENT APPLICATION

(11) **EP 1 524 587 A1**
(43) Date of publication of application: **20.04.2005**
(21) Application number: 03445114.6
(22) Date of filing: 15.10.2003
(51) Int. Cl.: G06F 3/023, G06F 3/033

(54) **Device having a joystick keypad**

(71) Applicant: Sony Ericsson Mobile Communications AB, 221 88 Lund (SE)
(72) Inventor: Töörn, Fredrik, 212 15 Malmö (SE)
(74) Representative: Akerman, Marten Lennart

(57) **Abstract**

The invention relates to a device having a joystick keypad, and more particularly a device having means for replacing or complementing an ordinary physical keypad. The device (1) comprises display means (2) for displaying images relating to the operation of the device and control means for controlling the display means by means of a layered menu structure, and a joystick (3) for moving a cursor in menus and making selections. The device further comprises a function key means (4A, 4B), wherein the control means is adapted to command display of a minimenu (8A) of soft keys (9) in response to operation of the function key means (4A, 4B), said soft keys (9) being selectable by means of the joystick (3). The function key means may comprise two function keys or a multipole key or another joystick. A special menu of soft keys (8A) is presented when the user activates a function key (4A). The soft keys (9) are selected by means of the joystick (3).

## Description

### Field of the invention

The present invention relates to a device having a joystick keypad, and more particularly a device having means for replacing or complementing an ordinary physical keypad by a joystick and preferably two function keys. A special menu of soft keys is presented when the user activates a function key. The soft keys are selected by means of the joystick.

### State of the art

Mobile phones and other handheld devices tend to be built increasingly smaller. Thus, there is limited space available for a keypad with physical keys. In the past, this has been solved by making the keys very small. Then, the keys are very difficult to operate with a finger or with a pointed stylus. Another solution was to make the whole keypad retractable into the device. This is a mechanically complicated and costly solution. Still another solution was to make the display touch sensitive, a so called touch screen combining the display with the keypad. However, touch screens are expensive.

Devices having joysticks for moving and selecting a cursor in a menu for playing games or otherwise operating the devices are previously known. It is possible to display the keypad with all twelve keys in a menu and to select the desired number by means of the joystick. However, it is not considered user-friendly to have to move the cursor through such a large menu, e.g. when dialling a telephone number or entering text.

### Summary of the invention

The present invention solves this problem by replacing or complementing the ordinary keypad with a joystick and function key means only. Operating the function key means causes a mini-menu of soft keys to be displayed. The soft keys are then selected by means of the joystick.

In accordance with the invention, there is provided a device comprising display means for displaying images relating to the operation of the device and control means for controlling the display means by means of a layered menu structure, and a joystick for moving a cursor in menus and making selections.

According to the invention the device further comprises a function key means, wherein the control means is adapted to command display of a minimenu of soft keys in response to operation of the function key means, said soft keys being selectable by means of the joystick.

Preferably, the function key means is adapted to be operated into a number of states, each state being associated with a different minimenu.

Suitably, the number of states is three, and each minimenu comprises four soft keys.

In one embodiment said minimenus in total comprise at least twelve keys.

Suitably, said keys comprise the numbers 0-9 and * and #.

Preferably, each soft key has several functions selectable by means of the joystick.

The joystick may be adapted to be operated several times in the same direction for selecting different functions of the same soft key.

Preferably, the joystick and the function key means are located on the device such that the joystick is suitable for operating with one hand, and the function key means is suitable for operating with the other hand.

In one embodiment, the function key means is second joystick, and the function key joystick may have at least three selectable states.

Preferably, the joystick is located on the same side as the display, and the function key joystick is located on a side at a right angle to the display.

In another embodiment, the function key means is a displaceable multipole key, and the multipole key may have at least three selectable states.

Preferably, the joystick is located on the same side as the display, and the multipole key is located on a side at a right angle to the display.

In a further embodiment, the function key means comprises a separate press button, preferably at least two separate press buttons.

Preferably, the press buttons together have at least three selectable states.

In a preferred embodiment, the press buttons together have three selectable states, a first state by pressing a first button, a second state by pressing a second button, and a third state by pressing both the first button and the second button simultaneously.

Suitably, the joystick is located on the same side as the display, and in that two separate press buttons are located on opposite sides at a right angle to the display.

The device may be a portable telephone, a pager, a communicator, a smart phone, a game device, an electronic organiser, an MP3 players or a computer.

### Brief description of the drawings

The invention will be described in detail below with reference to the accompanying drawings, in which:
fig. 1 is a front view of a small mobile phone according to the invention,
figs. 2A, B and C are front views of the telephone in fig. 1 showing different minimenus,
fig. 3A shows a side view of the telephone in fig. 1 having press buttons,
fig. 3B is a side view of an alternative embodiment having a multipole button,
fig. 3C is a side view of another alternative embodiment having a function key joystick, and
fig. 4 is a diagram of a layered menu structure according to the invention.

### Detailed description of preferred embodiments

The invention relates to handheld devices such as electronic game devices, mobile telephones, pagers, communicators, smart phones, electronic organisers, MP3 players, and Bluetooth® devices. It will also be possible to use the invention in stationary and laptop computers. The invention will be described in relation to a mobile telephone, but the invention is equally applicable to all devices requiring easy handling of soft keys.

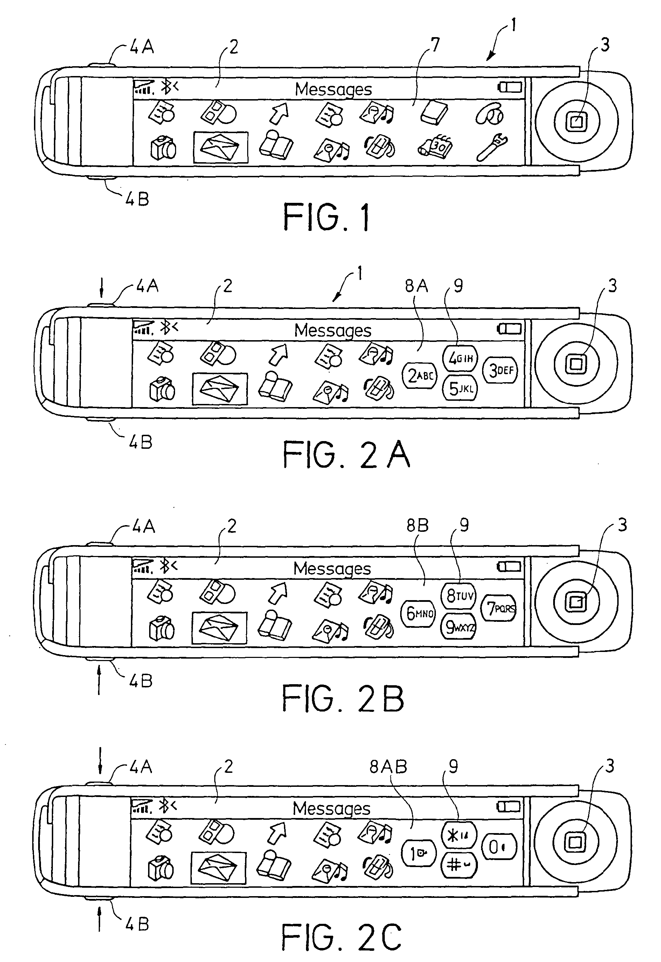

As is mentioned in the introduction, there is a trend to build handheld devices ever smaller. Fig. 1 shows an example of a mobile telephone, which is the size as small as a thick pen. The device 1 has room only for a display 2 and no ordinary keypad. Instead there is a joystick 3 for navigating and selecting in the displayed menu 7. This menu could be the main default menu, having various symbols or icons. As is known, the joystick may be operated to mark an icon, such as the envelope shown in the figure which usually is associated with the messages menu. By clicking or operating the device in a suitable way the user may jump to the messages menu. A control means (not shown) stores the menus and controls the display in response to the operations of the joystick and function key means as discussed below.

No keypad with the twelve ordinary numbers 0-9 and symbols *# is shown on the display. Instead, the present invention provides a shortcut to a small menu, in this application referred to as a minimenu, in which preferably four soft key buttons are displayed. This makes it possible to make a quick selection by means of the joystick. Figs. 2A through C show three possible minimenus covering the twelve ordinary number keys and * and # as well as the letters A through Z (including special characters such as A, Ä, Æ etc) and other symbols and punctuation marks. The minimenus enable emulation of the whole keypad. The minimenus are caused to be displayed by operating a special function key means.

In the first embodiment of the invention, the function key means consists of two press buttons 4A and 4B. The two buttons have three selectable states by depressing one button, the other or both simultaneously (in addition to the rest state when no button is depressed). It is also possible to use three or more separate buttons for causing display of any desired number of minimenus.

In fig. 2A a first minimenu 8A is displayed by pressing only press button 4A. The minimenu 8A consists of four soft keys 9 respectively used for accessing the numbers and letters 2 ABC, 3 DEF, 4 GIH and 5 JKL.

Fig. 2B shows the corresponding menu 8B, which is displayed by pressing on the press button 4B. The minimenu 8B consists of the soft key buttons for accessing the numbers and letters 6 MNO, 7 PQRS, 8 TUV and 9 WXYZ.

Fig. 2C shows the corresponding menu 8AB, which is displayed by pressing on both press buttons 4A and 4B simultaneously. The minimenu 8AB consists of the soft key buttons for accessing the numbers and characters 1, 0, *, #.

When the phone is in the normal mode, the telephone is ready for dialling a telephone number. To select the number 2, the user should make the following operations. First depress press button 4A to display the minimenu 8A. Then move the joystick 3 to the left once. Number 2 is now selected and is preferably displayed on another part of the display (not shown). If the next number is a 0 (zero), the user should depress both press buttons 4A and 4B simultaneously, and then click once to the right. When the whole number is written, the user can place the call by e.g. depressing the joystick. Also, erasing of erroneously selected numbers could be arranged in a straightforward manner.

When the telephone is in a text entering mode, such as if the user is in the messages menu, the function of the soft keys will be slightly different. If the message to be written starts with an H (for "Hello"), the user should take the following actions. First depress press button 4A to display the minimenu 8A. Then the user should move the joystick upwards twice to write H. Similarly, the soft key 2 produces A with one click, B with two clicks, C with three clicks, Å with four clicks, Ä with five clicks, etc as is common in the art. The number 2 is further down the line in text entering mode.

This way of text entering could be combined with a text editor or text prediction program (e.g. T9), which helps the user to quickly select whole words.

The function of the soft keys 4A and 4B are summarised in the following table.

| **Pressed function keys** | **Joystick selection** |
|---|---|
| - none - | Ordinary functionality in main menu |
| A key | ← = 2, abc |
| | → = 3, def |
| | ↑ = 4, ghi |
| | ↓ = 5, jkl |
| B key | ← = 6, mno |
| | → = 7, pqrs |
| | ↑ = 8 tuv |
| | ↓ = 9 wxyz |
| A & B key | ← = 1 |
| | → = 0, + |
| | ↑ = * |
| | ↓ = # |

Generally, the function key means should have three selectable states to select three minimenus, and each minimenu should have four selectable keys which enables selection of 3×4=12 keys.

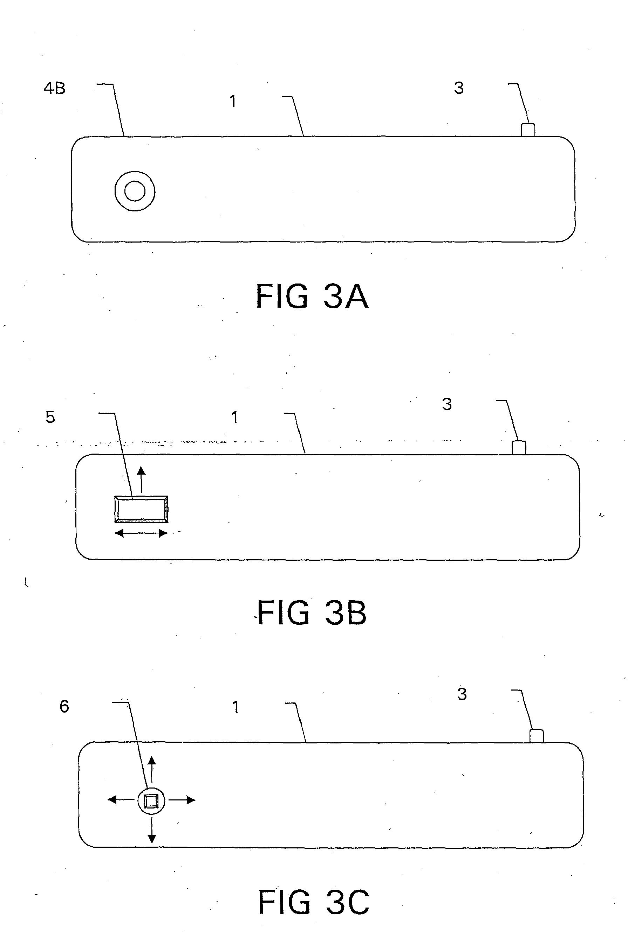

The function keys 4A and 4B are suitably located so that they can be operated with the user's forefinger and thumb without moving the fingers. The device in fig. 1 is suitably held with the right hand operating the joystick 3 and with the forefinger of the left hand operating the top press button 4A and the thumb operating the lower press button 4B. The location of the buttons is also shown in fig. 3A, showing the lower press button 4B and the joystick 3. In other words, the joystick 3 is located on the same side as the display 2 and the function keys 4A and 4B are located on opposite sides at a right angle to the display 2.

Fig 3B. shows a side view of an alternative embodiment of the invention. The function key means consists here of a multipole button 5, which is displaceable to the right, to the left and upwards. Thus, this function key also has three selectable states for accessing the three minimenus 8A, 8B and 8AB. This multipole key 5 is suitably located on a side at a right angle to the display 2.

Fig. 3C shows still another embodiment of the invention. The function key means consists here of a second joystick 6, which is displaceable to the right, to the left, upwards and possibly downwards. Thus, this function key also has (at least) three selectable states for accessing the three minimenus 8A, 8B and 8AB. This second joystick 6 is suitably located on a side at a right angle to the display 2. The joystick may have four or more selectable states. Even though only three states are deemed suitable for the twelve number keys, further states could be useful in other menus.

For instance, when the invention is used in a game device, any number of states associated with different minimenus could be useful.

In principle, the minimenus 8A, 8B and 8AB could be shown in the main default menu 7 as icons of their own, but this is not considered necessary and also takes space from the other symbols to be shown on the menu. A user will learn how to operate the function keys to display the minimenus e.g. from the manual supplied with the device. By practising and using trial and error the user will then quickly learn by heart how to operate the function keys.

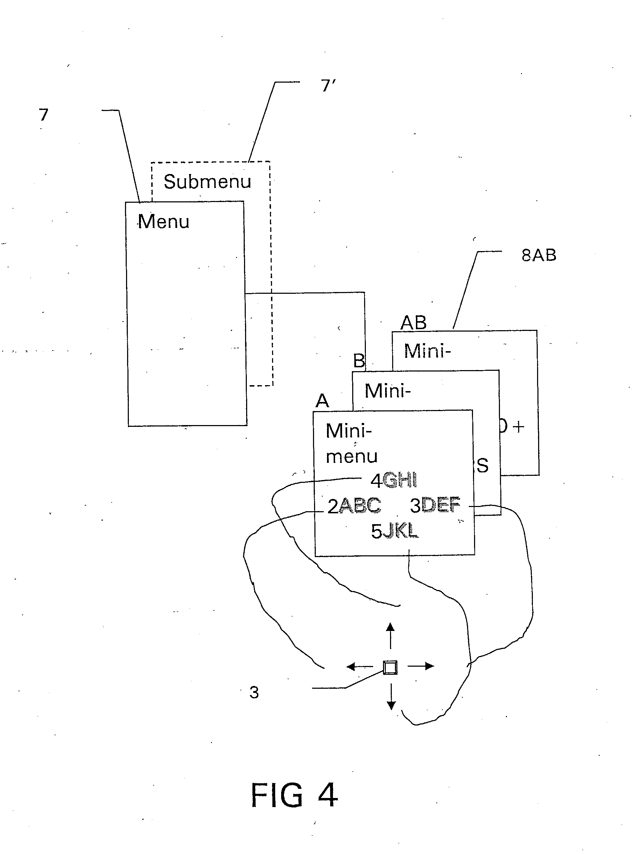

Fig. 4 shows a diagram of the organisation of the menus and minimenus in a hierarchical structure. The main menu 7 is associated with the minimenus A, B and AB. A minimenu is selected by operating the function key means as discussed above. Then in each minimenu, the respective soft key is selected by means of the joystick 3. There may exist sub-menus 7' below the main menu, e.g. the messages menu. Other minimenus can be associated with the sub-menus. The actual functions of the soft keys in these minimenus will be different but are handled in the same way.

The invention is also applicable in a device with a normal size for a mobile telephone, but with a large display not leaving any room for a keypad or with a touch screen key pad. The invention can also be used as a complement to an ordinary device with a normal keypad or with a retractable or foldable keypad.

The device of the invention can also be provided with a USB system bus input or other infrared (IR) or radio interfaces for inputting phone books, SMS templates and other data e.g. from a computer. The device can also be provided with a connection for an attachable keyboard.

The invention may be implemented with various combinations of hardware and software. The scope of the invention is only limited by the claims below.

## Claims

1. A device (1) comprising display means (2) for displaying images relating to the operation of the device and control means for controlling the display means (2) by means of a layered menu structure, and a joystick (3) for moving a cursor in menus and making selections, **characterised in that** the device (1) further comprises a function key means (4A, 4B, 5, 6), wherein the control means is adapted to command display of a minimenu (8A, 8B, 8AB) of soft keys (9) in response to operation of the function key means (4A, 4B, 5, 6), said soft keys (9) being selectable by means of the joystick (3).

2. A device according to claim 1, **characterised in that** the function key means (4A, 4B, 5, 6) is adapted to be operated into a number of states, each state being associated with a different minimenu (8A, 8B, 8AB).

3. A device according to claim 2, **characterised in that** the number of states is three, and each minimenu (8A, 8B, 8AB) comprises four soft keys.

4. A device according to claim 2, **characterised in that** said minimenus (8A, 8B, 8AB) in total comprise at least twelve keys.

5. A device according to claim 3 or 4, **characterised in that** said soft keys (9) are adapted to access the numbers 0-9 and * and #, as well as the letters A-Z.

6. A device according to any one of claims 1 to 5, **characterised in that** each soft key (9) has several functions selectable by means of the joystick (3).

7. A device according to claim 6, **characterised in that** the joystick (3) is adapted to be operated several times in the same direction for selecting different functions of the same soft key (9).

8. A device according to any one of claims 1 to 7, **characterised in that** the joystick (3) and the function key means (4A, 4B, 5, 6) are located on the device such that the joystick (3) is suitable for operating with one hand, and the function key means (4A, 4B, 5, 6) is suitable for operating with the other hand.

9. A device according to any one of claims 1 to 8, **characterised in that** the function key means is second joystick (6).

10. A device according to claim 9, **characterised in that** the function key joystick (6) has at least three selectable states.

11. A device according to claim 9 or 10, **characterised in that** the joystick (3) is located on the same side as the display (2), and the function key joystick (6) is located on a side at a right angle to the display (2).

12. A device according to any one of claims 1 to 8, **characterised in that** the function key means is a displaceable multipole key (5).

13. A device according to claim 12, **characterised in that** the multipole key (5) has at least three selectable states.

14. A device according to claim 12 or 13, **characterised in that** the joystick (3) is located on the same side as the display (2) , and the multipole key (5) is located on a side at a right angle to the display (2).

15. A device according to any one of claims 1 to 8, **characterised in that** the function key means comprises a separate press button.

16. A device according to claim 15, **characterised in that** the function key means comprises at least two separate press buttons (4A, 4B).

17. A device according to claim 16, **characterised in that** the press buttons (4A, 4B) together have at least three selectable states.

18. A device according to claim 17, **characterised in that** the press buttons (4A, 4B) together have three selectable states, a first state by pressing a first button (4A), a second state by pressing a second button (4B), and a third state by pressing both the first button (4A) and the second button (4B) simultaneously.

19. A device according to any one of claims 16 to 18, **characterised in that** the joystick (3) is located on the same side as the display (2), and **in that** two separate press buttons (4A, 4B) are located on opposite sides at a right angle to the display.

20. A device according to any one of the preceding claims, **characterised in that** the device is a portable telephone (1), a pager, a communicator, a smart phone, a game device, an electronic organiser, an MP3 players or a computer.
